# EUROPEAN PATENT APPLICATION

(11) **EP 3 578 276 A1**
(43) Date of publication of application: **11.12.2019**
(21) Application number: 19178969.2
(22) Date of filing: 07.06.2019
(51) Int. Cl.: B21B 15/00, B21B 1/22

(54) **ROLLING PLANT FOR ROLLING BILLETS OR BLOOMS**

(30) Priority: 07.06.2018 IT 201800006117
(71) Applicant: Danieli & C. Officine Meccaniche S.p.A., 33042 Buttrio (IT)
(72) Inventor: BORDIGNON, Giuseppe, 33050 BICINICCO (IT); ZILLI, Davide, 33030 BRESSA DI CAMPOFORMIDO (IT); TRINCO, Andrea, 33040 PRADAMANO (IT)
(74) Representative: Celona, Antonio

(57) **Abstract**

A rolling plant (1) for rolling billets or blooms, the plant defining a longitudinal feeding axis (X) of said billets or blooms and comprising
- a feeding area (2) for feeding said billets or blooms;
- a rolling train (3);
- a longitudinal roller table (4) to transport the billets or blooms from said feeding area (2) to said rolling train (3) along said longitudinal feeding axis (X);
- a welding machine (5) adapted to move forwards and backwards along said longitudinal roller table (4) to weld billets or blooms to one another when moving from said feeding area to said rolling train;
characterized in that said welding machine (5) is slidingly suspended from a bridge (7) and is adapted to translate parallel to said longitudinal feeding axis (X), and said bridge (7) is arranged at the longitudinal roller table (4) and is adapted to translate transversely to said longitudinal feeding axis (X), whereby in a first operating position of the bridge (7) the welding machine (5) occupies part of the longitudinal roller table (4) and can move forwards and backwards along said longitudinal feeding axis (X), whereas in a second operating position of the bridge (7) the welding machine (5) makes said longitudinal roller table (4) clear.

## Description

### Field of the invention

The present invention relates to a billet or bloom rolling plant for rolling billets or blooms, provided with a welding machine operating along a roller table arranged upstream of the rolling train.

### Background art

During the processes for rolling billets or blooms, in which the rolling train can be placed in line with the continuous casting, the need to ensure a high productivity of the plant without, however, determining a deterioration in the surface and internal quality of the final product is known.

The need to make the working times of the rolling train compatible with the casting times, so as to avoid a discontinuous operation of the stands with all the issues connected to the correct use of the rolling cylinders and the actuations thereto, is also known.

In the background art of rolling, systems have been proposed which provide for the welding of the tail of the billet, to be sent to the rolling units, with the head of the new billet prepared by the casting, or fed by accumulation stations associated with the line, so as to ensure a substantially continuous feeding of the rolling train. Alternatively, a charging table for billets can be arranged upstream of the welding machine, said charging table being adapted to receive the billets from continuous casting machines arranged out-of-line. These billets are sent to the rolling mill once they are welded together by means of a flash welding machine arranged between said charging table and said rolling mill.

However, known welding systems have highlighted extensive issues, both of the operational type and of the technological type.

Disadvantageously, generally, the current welding areas in this type of plant mainly have the following limitations/problems.

A first problem is that of the length of the welding area, with relative high plant costs, since the flash welding machine is fixed on a carriage which slides on rails fixed on the foundations of the plant, generally more than one meter deep with respect to the floor of the plant, passing above the roller table for the transport of the billets.

This means that in case of problems (such as obstructions in the rolling mill) the emergency extraction of the billet, for example 12000-12300 mm long, can be only performed by bringing the welding machine to a position in which the billet itself is out of the encumbrance of the welding machine.

This is a problem also for the installation of the welding area in case of the revamping of existing plants which have limited space. Despite the optimization of the electrical parameters applied by the welding machine to the billet head/tail (which allows to minimize the welding times, thus shortening the welding machine stroke and therefore, potentially, the welding space, theoretically allowing to reduce the welding machine working space), the welding area cannot be compacted due to this encumbrance problem which is detected in case of need to evacuate the billet from the line.

To allow this extraction, a roller table is arranged on the line, generally consisting of at least nine motorized rollers, of which at least six motorized rollers are retractable and joined to the plant foundation, and the remaining three motorized rollers are part of the welding machine carriage.

When the welding machine is in operation, during the movement thereof, it lowers, depending on the position, a part of the six retractable motorized rollers by means of a cam device, temporarily replacing said part of six retractable motorized rollers with the three motorized rollers mounted on the carriage thereof.

The welding machine is further equipped with a fixed inlet roller and a further fixed outlet roller, adapted to support the billet during the welding. Generally, said fixed rollers are not motorized.

When the welding machine is in operation, the carriage which supports the welding machine, together with said three motorized rollers, moves along the line: as the welding machine moves towards the rolling mill, the retractable rollers of the line are lowered to allow the passage of the carriage, being temporarily replaced by the motorized rollers of the welding machine. The retractable rollers, previously lowered, are instead lifted upstream of the welding machine. Thereby, the product is always supported as the welding continues until the completion thereof. Disadvantageously, this complexity, due to the presence of both the retractable rollers forming part of the line and the motorized rollers on board the carriage of the welding machine, makes it difficult for operators to carry out the maintenance on the welding machine itself. Simple operations, such as changing the wear pads of the clamps, force in fact the operators to slip into the welding machine in unsafe conditions, also involving long times to perform such activities, since the spaces are very narrow and uneasy.

Furthermore, when the welding machine is excluded from the process for the maintenance thereof, a by-pass roller table must necessarily be present, which is introduced in the line as a replacement for said three motorized rollers, to allow the support of the products to be sent to the rolling mill (for example, in "billet to billet" productions, which do not require welding).

Another problem is represented by the cleaning of the welding area, since, during the welding, the welding machine dirties the entire roller table, forcing the operators to a continuous cleaning activity. The carriage itself appears to be an element which makes the cleaning of the welding area, as well as of the welding machine itself, difficult.

The need is therefore felt to overcome the aforesaid drawbacks.

### Summary of the Invention

It is an object of the present invention to provide a rolling plant with a more compact welding area, with the aim of reducing installation costs, facilitating maintenance and cleaning, and reducing the impact on the foundations.

It is another object of the present invention to provide a welding area which allows the installation of a flash welding machine itself in existing plants (revamping) in which the encumbrance of the current welding area is a hindrance.

The present invention achieves at least one of such objects, and other objects which will be apparent in the light of the present description, by means of a billet or bloom rolling plant for rolling billets or blooms, defining a longitudinal feeding axis X of said billets or blooms, the plant comprising:
- a feeding area for feeding said billets or blooms;
- a rolling train;
- a longitudinal roller table to transport the billets or blooms from said feeding area to said rolling train along said longitudinal feeding axis X;
- a welding machine adapted to move along said longitudinal roller table to weld billets or blooms to one another when moving from said feeding area to said rolling train;
characterized in that said welding machine is slidingly suspended from a bridge and is adapted to translate parallel to said longitudinal feeding axis X, and said bridge is arranged at the longitudinal roller table and is adapted to translate transversely to said longitudinal feeding axis X, whereby in a first operating position of the bridge the welding machine occupies part of the longitudinal roller table and can move forwards and backwards along said longitudinal feeding axis X, whereas in a second operating position of the bridge the welding machine makes said longitudinal roller table clear.

Preferably, but not necessarily, the welding machine is suspended from a carriage slidingly fastened to the bridge so as to translate parallel to said longitudinal feeding axis X.

Advantageously, the fact of hanging the flash welding machine to a bridge or to an overhead crane allows the extraction of the billet or bloom, without having to bring the flash welding machine out of the encumbrance of the billet itself along the feeding axis thereof, and this allows to make the layout more compact. For example, the solution of the invention allows, for 12300 mm long billets with a maximum billet speed equal to 0.18 m/s during the welding step, to compact the layout by almost 2.5 meters with respect to a plant with a conventional welding line.

A further advantage is given by the fact that the compacting of the layout allows to reduce the number of motorized rollers, passing, for example, from at least nine motorized rollers to only four motorized rollers, with a consequent reduction in the cost of the plant.

Furthermore, by hanging the flash welding machine on the bridge or on the overhead crane, it is possible to use retractable motorized rollers which are much more compact than the conventional ones, since they can have a smaller size with respect to those of the background art, as they do not need to be inserted in deep foundations.

Advantageously, the solution of the invention also allows to avoid the presence of a by-pass roller table. Therefore, the motorized rollers of the longitudinal roller table always remain in line, unlike in the conventional plant in which at least the three motorized rollers arranged on board the carriage supporting the welding machine are moved out-of-line with the welding machine itself, by means of appropriate movement means.

Other advantages of at least some of the embodiments of the plant of the invention are in that:
- the motorized rollers of the retractable roller table are cantilevered and this, together with the hanging flash welding machine, allows to keep the welding area much cleaner: dirt can in fact fall underneath them without laying on movement members;
- the motorized rollers of the retractable roller table do not have a transmission chain, but can have the motor directly connected to the roller;
- the fixed rollers, arranged in a cantilever manner on the flash welding machine, do not have covers at both inlet and outlet of the machine, but have flaps or side edges for containing the billet with the aim of avoiding dirt accumulation points;
- hanging the flash welding machine on the bridge or overhead crane allows to drastically improve the cleaning of the machine, since during the welding process the presence of a shield called "spark killer", similar to the object of patent application WO2018051225 of the same applicant, allows to discharge all the sparks downwards, avoiding that these remain on the welding machine and this also by virtue of the fact that the entire retractable roller table is no longer under the welding machine itself, but only the motorized cantilevered rollers;
- hanging the flash welding machine on the bridge or overhead crane drastically improves the maintenance of the machine, since a special out-of-line maintenance area is provided, in which the operator can easily access all the parts of the machine, in particular the lower driving unit, the clamps and the lower upsetting cylinder (i.e., one of the hydraulic cylinders which allows to press the head and tail of the billets during the welding: to remove the current one the operator must crawl under the machine).

With regard to the savings on plant costs, the reduction in the number of retractable rollers, the simplification and compactness of the latter and the considerable lower impact thereof on the foundations, given that it is not necessary to house said retractable rollers in depth, the possibility of creating a maintenance area with an encumbrance reduced with respect to that used by the current carriage of the flash welding machine, and the removal of the by-pass roller table allow considerable savings on the investment of the customer.

Further features and advantages of the invention will become more apparent in the light of the detailed description of exemplary, but not exclusive, embodiments. The dependent claims describe particular embodiments of the invention.

### Brief description of the Figures

In the description of the invention, reference is made to the attached drawings, provided by way of explanation and not by way of limitation, in which:
Figure 1 shows a diagram of the rolling plant in accordance with the invention;
Figure 2 shows a perspective view of part of the plant of Figure 1;
Figures 3 shows a detail of the plant of the invention;

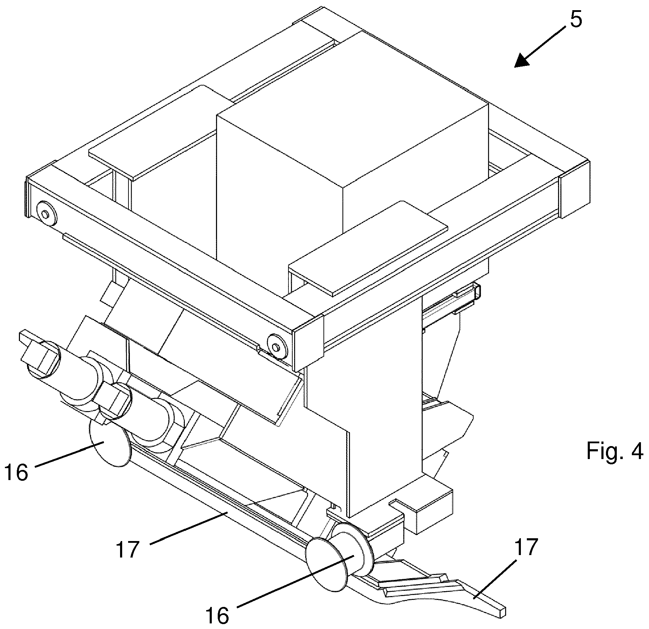

Figure 4 shows a perspective view of the welding machine of the plant of the invention.

### Description of exemplary embodiments of the invention

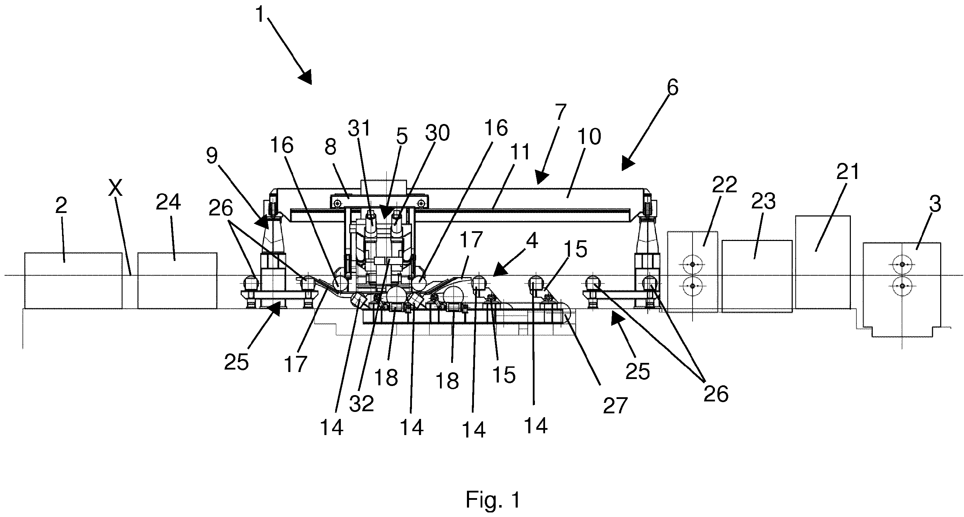

With reference to Figure 1, an example of a rolling plant 1 is shown for rolling thick metal products, in particular billets or blooms, in accordance with the invention. The rolling plant 1, defining a longitudinal feeding axis X of the metal products, comprises the following components:
- a feeding area 2 of the metal products for feeding the metal products one at a time along axis X;
- a rolling train 3, of which only a first rolling stand is shown;
- a longitudinal roller table 4 to transport the metal products from the feeding area 2 to the rolling train 3 along the longitudinal feeding axis X;
- a welding machine 5 adapted to move forwards and backwards along the longitudinal roller table 4 to weld metal products to one another when moving from the feeding area 2 to the rolling train 3.

The welding machine 5 is a flash welding machine for a flash welding of billets or blooms. The flash welding machine is not suitable for welding thin metal products, such as strips or sheets, because the strip or sheet would be damaged; as well as the laser welding machine for welding strips or sheets is not suitable for a flash welding of thick metal products, such as billets or blooms, because the laser power is not sufficient for appropriately welding billets or blooms.

Preferably the flash welding machine 5, designed for welding a tail of a first billet or bloom with a head of a second billet or bloom along the longitudinal feeding axis X, is a welding assembly comprising (Figure 1)
- a first fixed structure or frame 30;
- first clamping means, placed on said first structure 30, for clamping the tail of the first billet or the head of the second billet;
- a second sliding structure or frame 31, connected to said first structure 30 and sliding, parallel to the feeding axis, with respect to the first structure 30;
- second clamping means, placed on said second structure 31, for clamping the head of the second billet or the tail of the first billet;
- at least two upsetting cylinders 32 for adjusting the position of the second structure 31 with respect to the first structure 30 in order to press head and tail of the billets during the welding.

Welding is achieved by means of an electric discharge produced by electrical power supplies which supply electric current the billets to be welded. The billets must be effectively blocked during welding. To this end, there are provided clamping means which serve to hold the billets in position during welding and to transmit the electric current to the billets to be welded.

These clamping means typically comprise elements, in particular wear pads, which go directly into contact with the billets to be welded. As the welding is carried out, the clamps that hold the head and tail of the billets to be welded are approached by means of said upsetting cylinders 32. This operation is necessary to allow the effective adhesion between the two components in welding, which form a welded joint. However, around the joint a burr is produced, due to the expulsion of the molten material towards the outside during welding. This burr must be removed (or reduced) if it is excessive, so as not to cause problems during rolling. Advantageously, the welding machine 5 is slidingly suspended, for example by means of a carriage 8, from a bridge 7 and is adapted to slide parallel to the longitudinal feeding axis X. Alternatively, the welding machine 5 can be equipped to be directly suspended from the bridge 7, without the need to provide for the carriage 8, and to slide parallel to the longitudinal feeding axis X.

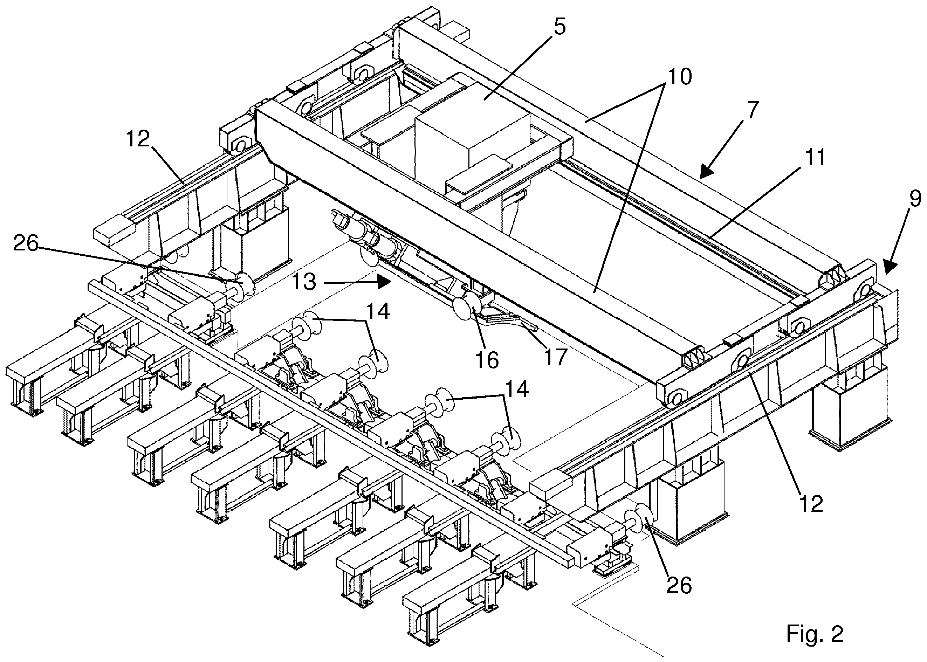

The bridge 7 is arranged at the longitudinal roller table 4 and is adapted to translate transversely to the longitudinal feeding axis X, whereby, in a first operating position of the bridge 7, the welding machine 5 occupies part of the longitudinal roller table 4 and can move forwards and backwards along the longitudinal axis X, whereas, in a second operating position of the bridge 7, the welding machine 5 leaves the longitudinal roller table 4 completely clear (Figure 2).

For example, the bridge 7 can translate orthogonally to the longitudinal feeding axis X or it can translate transversely to the longitudinal feeding axis X along a slightly curved surface, for example by means of a lifting system of the bridge 7 of the parallelogram type.

Carriage 8 and bridge 7 can be components of a bridge crane or overhead crane 6. Advantageously, the whole flash welding machine is suspended from the bridge 7 or from the bridge crane 6. This means that the welding machine does not have parts fixed on the ground and that the whole welding assembly, above disclosed, is suspended from the bridge 7 or bridge crane 6.

The feeding area 2 of the metal products can comprise a heating furnace, if the heating of the product before the rolling is required, or a movement bed, if the products already reach a suitable temperature on said bed. Alternatively, the feeding area 2 can coincide with a continuous casting machine in the case of an endless production process.

Preferably, the bridge 7 is a bridge suspended on a fixed structure 9 of the plant.

For example, the bridge 7 is a bridge with two beams 10, parallel to the longitudinal feeding axis X, and the carriage 8 can slide on two first guides 11, each first guide 11 being arranged on a respective beam 10 of the bridge 7. The bridge 7, instead, can slide on two second guides 12, orthogonal to the beams 10 and arranged on the fixed structure 9.

Advantageously, at the second operating position of the bridge 7, i.e. the one in which the welding machine 5 leaves the longitudinal roller table 4 completely clear, a maintenance area 13 of the welding machine itself is provided, which allows the operators to have an easy access also to the parts inside the machine (Figure 2). The longitudinal roller table 4 is of the single-channel type and comprises, or consists of, a plurality of rollers 14, preferably motorized, each roller 14 being mounted on a respective pivoting support 15. The rollers 14 are therefore oscillating rollers, i.e. retractable rollers. Advantageously, by virtue of the configuration of the welding machine of the plant of the invention, the number of rollers 14 can be less than or equal to five, preferably less than or equal to four.

The welding machine 5 is provided at the bottom with at least two preferably idle and non-motorized rollers 16, and with at least one cam element 17 adapted to lower at least two rollers 14 of the roller table 4 from a working position thereof, i.e., supporting the metal products when moving, to a retracted position during a movement of the welding machine 5 along the longitudinal feeding axis X, so that said at least two rollers 16 temporarily replace said at least two rollers 14 in the working or supporting position.

In a variant, the welding machine 5 is provided at the bottom with only two rollers 16, one input roller and one output roller, adapted to support the billet during the welding.

The rollers 16, preferably idle and non-motorized, are fixed rollers of the welding machine 5; therefore the rollers 16 do not oscillate like the retractable rollers 14. Further rollers are not advantageously provided, in addition to the rollers 16, on board the welding machine 5.

Preferably, the rollers 14 are provided on one side thereof with an idle wheel 20 and the cam element 17 is configured to act on one or more idle wheels 20, during the movement of the welding machine along axis X, in order to lower the respective one or more rollers 14.

Preferably, in order to avoid interference between the lower part of the welding machine 5 and the roller table 4 when the welding machine has to be moved away from the axis X, translating together with the bridge 7 transversely to said axis X, at least some of the rollers 14 can be provided with a respective actuation means 18, for example a pneumatic cylinder, to lower the corresponding roller 14 before the bridge 7 passes from the first operating position along the axis X to the second operating position spaced from the axis X.

A further advantage can be obtained by providing the rollers 14 as rollers cantilevered with respect to the respective pivoting support 15 and also providing the rollers 16 of the welding machine as rollers cantilevered with respect to a base of the welding machine 5. In fact, below the rollers 16 and 14 an empty space can be provided, without any other components of the plant. This allows to reduce the dirt caused on the other components of the longitudinal roller table 4 during the welding.

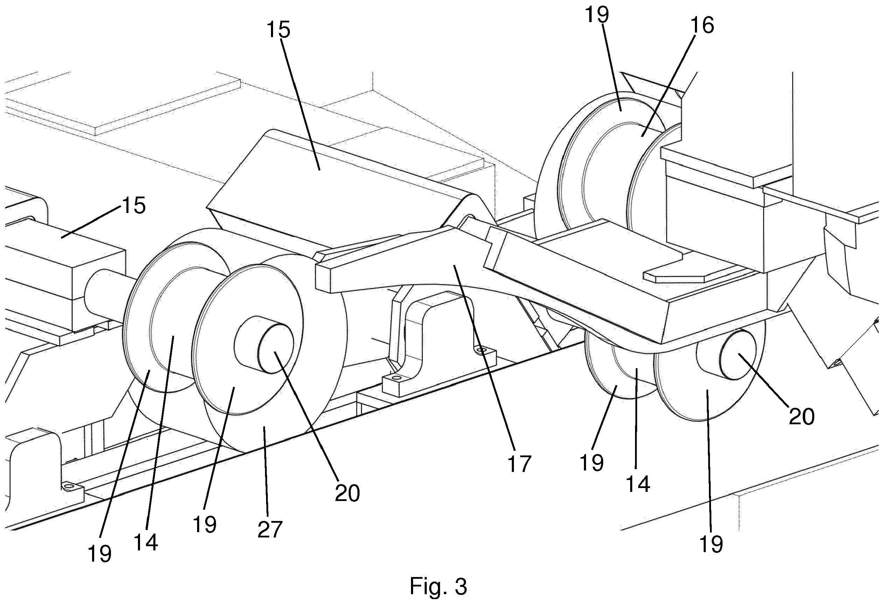

It is also possible to properly contain the metal product along the axis X and avoid dirt accumulation points by making the rollers 14 and/or the rollers 16 provided with lateral edges or flaps 19 (Figure 3).

With particular reference to the example of Figure 1, a stretch of the rolling plant 1 of the invention is shown which extends from a heating furnace 2, only partially shown, to an emergency shears 21 placed before the entrance to the rolling train 3, served by a pinch roll 22 located upstream of said emergency shears 21.

The emergency shears 21 intervene in case of an obstruction in the rolling train 3 to divide the billet or part of billet already rolled from that still to be rolled. The pinch roll 22 is used to move the billet towards the rolling train.

Between the pinch roll 22 and the emergency shears 21 one or more deburring devices 23 are provided to eliminate the burrs at the welding joints of the metal products.

The heating furnace is of the type designed for the accumulation of metal products, also coming from several casting lines, and/or for the mixed feeding of hot and cold products and cooperates upstream with known transport and feeding means. Downstream of the heating furnace 2, a descaler 24 can be present, fixed to the foundation plane, for example equipped with nozzles both of the fixed type and of the rotating type.

Downstream of said descaler 24 there is provided the fixed structure 9 comprising the bridge 7, and possibly also the carriage 8, on which the welding machine 5 is hanging. The fixed structure 9 is arranged above the roller table 4 and also extends along a direction transverse to the axis X.

Preferably, at the two ends of the fixed structure 9 along the axis X, i.e. at the two ends of the bridge crane 6 along the feeding direction of the metal products, there is provided a respective support unit 25 provided with at least two fixed cantilevered rollers 26, arranged along the axis X aligned to the rollers 14 of the roller table 4 when said rollers 14 are in the working or metal product support position.

When exiting the roller table 4 and downstream of the end-of-stroke of the welding machine 5, a heating system can also be provided which is adapted to uniform the temperature, in particular at the edges and/or the junction area between the metal products. Such heating system can be of the induction type.

Considering the example of the billets as a metal product to be rolled, in the plant of the invention, during the welding cycle, the welding machine 5 moves in a manner coordinated to the billet in order to carry out, during the movement, the welding between the tail of the billet directed to the rolling mill and the head of the next billet moving along the axis X.

The possible carriage 8 supporting the welding machine 5 is provided with wheels which run on the guides 11 of the beams 10 and moves with an alternating rectilinear motion, in relation to the movement of the billets to be welded, on said guides 11, for example in the form of rails. The carriage 8, and therefore the welding machine 5, has, in relation to the welding cycle, a advancement stroke correlated to the movement of the billets from an initial position to an end-of-stroke position. Similarly, in a further construction variant, the welding machine 5 can be equipped with wheels adapted to slide directly on the guides 11 of the beams 10.

The advancement of the welding machine 5 causes the lowering of at least two of the rollers 14, which constitute the motorized roller table 4 for supporting and moving the billets, and of the respective pivoting supports 15.

Such lowering in this embodiment is carried out by the cooperation between the cam element 17, integral with the welding machine during the advancement, and the idle wheels 20 of at least two rollers 14 so that the relative rollers 14 and pivoting supports 15 are lowered below the feeding axis X, and are raised again, by virtue of a counterweight 27 thereof or of a raising system, once the welding machine 5 has passed over them to constitute again a support for the advancing billets. With the lowering of the at least two rollers 14, the working or billet support position thereof is occupied by the at least two rollers 16 of the welding machine 5 itself. Advantageously, if any billet is to be removed from the roller table 4, preferably some pneumatic cylinders 18 allow the lowering of the respective rollers 14 (Figures 1 and 3) so that interference between the lower part of the welding machine 5 and the roller table 4 is avoided when the welding machine 5 is moved away from the axis X, translating together with the bridge 7 transversely to said axis X, passing from the first operating position along the axis X to the second operating position spaced from the axis X.

## Claims

1. A billet or bloom rolling plant (1) for rolling billets or blooms, the plant defining a longitudinal feeding axis (X) of said billets or blooms and comprising
- a feeding area (2) for feeding said billets or blooms;
- a rolling train (3);
- a longitudinal roller table (4) to transport the billets or blooms from said feeding area (2) to said rolling train (3) along said longitudinal feeding axis (X);
- a welding machine (5) adapted to move along said longitudinal roller table (4) to weld billets or blooms to one another when moving from said feeding area to said rolling train;
**characterized in that** said welding machine (5) is slidingly suspended from a bridge (7) and is adapted to translate parallel to said longitudinal feeding axis (X), and said bridge (7) is arranged at the longitudinal roller table (4) and is adapted to translate transversely to said longitudinal feeding axis (X), whereby in a first operating position of the bridge (7) the welding machine (5) occupies part of the longitudinal roller table (4) and can move forwards and backwards along said longitudinal feeding axis (X), whereas in a second operating position of the bridge (7) the welding machine (5) makes said longitudinal roller table (4) clear.

2. A plant according to claim 1, wherein said bridge (7) is a bridge suspended on a fixed structure (9) of the plant.

3. A plant according to claim 2, wherein said suspended bridge is a bridge with two beams (10), parallel to the longitudinal feeding axis (X), and the welding machine is adapted to slide on first guides (11), each first guide (11) being arranged on a respective beam (10) of the bridge (7).

4. A plant according to claim 3, wherein said suspended bridge is adapted to slide on second guides (12), orthogonal to the beams (10) and provided on said fixed structure (9).

5. A plant according to any one of the preceding claims, wherein a maintenance area (13) of the welding machine (5) is provided at said second operating position of the bridge.

6. A plant according to any one of the preceding claims, wherein the longitudinal roller table (4) comprises a plurality of first, preferably motorized, rollers (14), each first roller (14) being mounted on a respective pivoting support (15), preferably in a number less than or equal to five.

7. A plant according to claim 6, wherein the welding machine (5) is provided at the bottom with at least two second rollers (16), preferably only two second rollers which are possibly idle, and with at least one cam element (17) adapted to lower at least two first rollers (14) from a supporting position, in which said at least two first rollers support the billets or blooms, to a retractable position during a movement of the welding machine (5) along said longitudinal feeding axis (X), so that said at least two second rollers (16) replace said at least two first rollers (14) in said supporting position.

8. A plant according to claim 6 or 7, wherein at least some of said first rollers (14) are provided with respective actuation means (18) to lower the corresponding first roller (14) before the bridge (7) passes from the first operating position to the second operating position.

9. A plant according to claim 7, wherein said first rollers (14) are cantilevered with respect to the respective pivoting support (15) and/or said second rollers (16) are cantilevered with respect to a base of the welding machine (5).

10. A plant according to any one of claims 7 to 9, wherein said first rollers (14) and/or said second rollers (16) are provided with side edges (19) for containing the billet or bloom along the longitudinal feeding axis (X).

11. A plant according to any one of claims 7 to 10, wherein the first rollers (14) are provided with an idle wheel (20) on a side thereof and said at least one cam element (17) is adapted to act on said idle wheel (20) to lower the respective first roller.

12. A plant according to any one of the preceding claims, wherein the welding machine (5) is suspended from a carriage (8) slidingly fastened to the bridge (7) so as to translate parallel to said longitudinal feeding axis (X), preferably wherein said carriage (8) and said bridge (7) are components of a bridge crane (6).

13. A plant according to any one of the preceding claims, wherein said feeding area (2) for said billets or blooms comprises a heating furnace and/or a movement bed, or comprises a continuous casting machine.

14. A plant according to any one of the preceding claims, wherein said welding machine (5) is a flash welding machine entirely suspended from the bridge (7) or from an overhead crane (6).

15. A plant according to claim 14, wherein said flash welding machine is a welding assembly comprising
- a first fixed structure or frame (30);
- first clamping means, placed on said first structure (30), for clamping a tail of a first billet or a head of a second billet;
- a second sliding structure or frame (31), connected to said first structure (30) and sliding, parallel to the longitudinal feeding axis (X), with respect to the first structure (30);
- second clamping means, placed on said second structure (31), for clamping the head of the second billet or the tail of the first billet;
- at least two upsetting cylinders (32) for adjusting the position of the second structure (31) with respect to the first structure (30) along a direction parallel to the longitudinal feeding axis (X), in order to press the head of the second billet on the tail of the first billet, or vice versa, during welding;
and wherein the whole welding assembly is slidingly suspended from the bridge (7) or from the overhead crane (6).
